# EUROPÄISCHE PATENTSCHRIFT

(11) **EP 2 208 566 B1**
(45) Veröffentlichungstag und Bekanntmachung des Hinweises auf die Patenterteilung: **13.02.2019**
(21) Anmeldenummer: 09016160.5
(22) Anmeldetag: 31.12.2009
(51) Int. Cl.: B23D 79/02

(54) **SCHNEIDWERKZEUG MIT EINEM SPANABHEBENDEN SCHNEIDMESSER UND VERFAHREN ZUR BEFESTIGUNG DES SCHNEIDMESSERS IM SCHNEIDWERKZEUG**
CUTTING TOOL WITH A MACHINING CUTTING BLADE AND METHOD FOR ATTACHING SAID CUTTING BLADE IN SAID CUTTING TOOL
OUTIL DE COUPE AVEC COUTEAU DE COUPE PAR ENLÈVEMENT ET MÉTHODE POUR ATTACHER LE COUTEAU DE COUPE À L'OUTIL DE COUPE

(30) Priorität: 20.01.2009 DE 102009005275
(43) Veröffentlichungstag der Anmeldung: 21.07.2010
(73) Patentinhaber: Heule Werkzeug AG, 9436 Balgach (CH)
(72) Erfinder: Heule, Heinrich, 9434 Au/SG (CH)
(74) Vertreter: Riebling, Peter

(56) Entgegenhaltungen:
- WO-A1-2010/071549
- DE-A1-102004 054 989
- US-A1- 2007 065 240

## Beschreibung

Die Erfindung betrifft ein Schneidwerkzeug nach dem Oberbegriff des Patentanspruches 1 sowie ein Verfahren nach dem Oberbegriff des Patentanspruches 12.

Schneidmesser für spanabhebende Schneidwerkzeuge werden in vielfältigen Ausführungsformen eingesetzt.

Eine mögliche Ausführungsform zeigt beispielsweise der Stand der Technik in Form der eigenen Patentanmeldung DE 10 2004 054 989. Solche Schneidmesser werden insbesondere für Entgratwerkzeuge verwendet, jedoch auch für Plansenkwerkzeuge, Formsenkwerkzeuge oder Fräswerkzeuge. Die dortige Offenbarung soll in vollem Umfang für die vorliegende Erfindung gelten.

Unterschreiten solche Schneidmesser eine gewisse Mindestgröße von z. B. 10 mm, sodass deren Handhabung erschwert ist, gibt es Probleme, ein solches relativ kleines und schwer zu handhabendes Schneidmesser in dem entsprechenden Werkzeug auszuwechseln.

In anderen Anwendungsfällen geht es nicht ausschließlich um kleine Messer, die aufgrund ihrer Kleinheit schwer zu handhaben sind, sondern auch um schwierige Montageverhältnisse, bei denen es schwierig ist, ein vergleichsweise gut zu handhabendes Messer an einen verborgenen oder schwer zugänglichen Ort am Werkzeug selbst einzusetzen.

Für alle diese Fälle gibt es Probleme, das Schneidmesser in der gewünschten, lagenrichtigen Position am Werkzeughalter selbst einzusetzen.

Die US 2007/065240 A1 offenbart bereits sämtliche Merkmale des unabhängigen Patentanspruches 1, außer dass das gesamte Schneidwerkzeug mit Messerhalter und Messer nicht ausdrücklich als drehend antreibbar beschrieben ist, wobei der Messerhalter an der den Schneidkanten gegenüberliegenden Rückseite über eine Sollbruchstelle angesetzt ist.

Der Erfindung liegt deshalb die Aufgabe zugrunde, ein Schneidmesser für spanabhebende Schneidwerkzeuge der eingangs genannten Art so weiterzubilden, dass es leicht zu handhaben ist oder dass es in ein schwierig zugängliches Werkzeug leicht einsetzbar ist.

Zur Lösung der gestellten Aufgabe ist die Erfindung durch die Merkmale des Anspruches 1 und/oder durch die Merkmale des Anspruches 12 definiert.

Grundlegendes Merkmal der vorliegenden Erfindung ist, dass das Schneidmesser über eine Sollbruchstelle mit mindestens einem Messerhalter als Handhabungshilfe verbunden ist.

Mit der gegebenen technischen Lehre ergibt sich der wesentliche Vorteil, dass es nun erstmals möglich ist, sehr kleine Schneidmesser von z. B. einer Länge von 1,9 mm bis 5 mm gut zu handhaben, weil erfindungsgemäß an einer bestimmten Stelle des Schneidmessers ein der Handhabung dienender Messerhalter vorhanden ist, der über eine Sollbruchstelle mit dem Messer verbunden ist.

Zur Montage eines solchen Schneidmessers, der erfindungsgemäß mit einem Messerhalter als Handhabungshilfe verbunden ist, wird so vorgegangen, dass das Schneidmesser mit dem noch daran über die Sollbruchstelle befestigten Messerhalter in eine Öffnung des Schneid- oder Senkwerkzeuges eingeführt wird und dort lagenrichtig durch die Mechanik im Schneid- oder Senkwerkzeug verankert wird. Nach der lagenrichtigen Verankerung wird nun durch einen kurzen Druck auf den Messerhalter (der als Handhabungshilfe dient) die Sollbruchstelle durch Biegung beansprucht, solange bis sie bricht. Dies erfolgt in der Regel durch eine kurze Biegung am Messerhalter, sodass die Sollbruchstelle dann innerhalb der Werkzeugaufnahme liegt und nicht störend aus dem Werkzeug herausragt. Damit wird der Vorteil erreicht, dass der Messerhalter erst dann abgebrochen wird, wenn das Messer fest und lagenrichtig fertig montiert im Werkzeug gehalten ist.

Selbstverständlich ist es im Rahmen der vorliegenden Erfindung offen, wo der Messerhalter über die Sollbruchstelle an dem Schneidmesser ansetzt. Dies kann an verschiedenen Punkten erfolgen.

In einer ersten Ausgestaltung ist es vorgesehen, dass der Messerhalter über die Sollbruchstelle an dem vorderen Gleitradius des Messers, d. h., also direkt am Messerkopf ansetzt, und in einer zweiten Ausführungsform ist es vorgesehen, dass der Messerhalter am Boden des Schneidmessers ansetzt.

In einer dritten Ausgestaltung ist es zusätzlich vorgesehen, dass der Messerhalter mit der daran ansetzenden Sollbruchstelle am hinteren Teil des Schneidmessers ansetzt, d. h., an dem Teil, der gegenüberliegend zu dem Gleitradius und den Schneidkanten ausgebildet ist.

Wichtig ist bei allen Anwendungsfällen, dass das Messer mit mindestens einer Handhabungshilfe verbunden ist, die mit einer Sollbruchstelle mit dem Messer selbst verbunden ist.

Der Hinweis darauf, dass der Messerhalter (Handhabungshilfe) am Gleitradius, d.h. also am Messerkopf des Schneidmessers selbst befestigt ist, ist nur beispielhaft zu verstehen. Bei anderen Messern, wie z. B. Fräsmesser oder dergleichen kann ein solcher Gleitradius entfallen, und wichtig hierbei ist nur, dass der Messerhalter (Handhabungshilfe) - in diesem Ausführungsbeispiel - unmittelbar an dem schneidenden Teil des Schneidmessers selbst angreift und nicht an einem anderen Teil oder einer anderen Fläche dieses Schneidmessers.

Die Erfindung ist auch nicht auf die Anordnung eines einzigen Messerhalters begrenzt, der an einer Seite am Werkzeug ansetzt. In einer anderen Ausführung kann vorgesehen werden, dass am Werkzeug (z. B. dem Schneidmesser) zwei Messerhalter angeordnet sind, von denen jeder über eine Sollbruchstelle mit dem Werkzeug verbunden ist. Eine solche Ausführung ist besonders dann geeignet, wenn vorgesehen ist, dass das Schneidmesser durch Angreifen an dem in Einführrichtung hinteren Messerhalter in die Ausnehmung am Werkzeughalter eingeschoben wird. Der in Einführrichtung vorauslaufende Messerhalter geht durch die Einführöffnung im Werkzeughalter hindurch und kommt auf der anderen Seite des Werkzeughalters wieder heraus. Damit ist das in die Öffnung am

Werkzeughalter eingesetzte und nun arretierte Schneidmesser mit zwei einander gegenüberliegenden und vorzugsweise zueinander fluchtenden Messerhaltern ausgerüstet.

Zur Fertigstellung der Montage werden dann zunächst der eine und dann der andere Messerhalter abgebrochen. Eine solche Zweifach-Anordnung von Messerhaltern ist bei besonders kleinen und schwierig zu handhabenden Werkzeugen zweckmäßig.

Die Erfindung ist im Übrigen nicht auf radial in einem Messerfenster eines Werkzeughalters verschiebbar geführte Messer. Es ist völlig gleichgültig, in welcher Richtung das Messer verschiebbar ist. Ebenso gibt es Anwendungsfälle, die ein unverschiebbar im Messerhalter befestigtes, jedoch auswechselbares Messer zeigen. Bei einer solchen Anwendung ist der Messerhalter selbst verschiebbar oder schwenkbar ausgebildet, der jedoch ein unverschiebbares Messer trägt. Auch solche Anwendungsfälle sollen vom Gegenstand der Erfindung umfasst sein.

Der einfacheren Beschreibung wegen wurde in der Beschreibung nur ein einziges, auswechselbares Messer beschrieben. Hierauf ist die Erfindung jedoch nicht beschränkt. Es können beliebig viele Messer oder andere Werkzeugeinsätze mit der erfindungsgemäßen, abbrechbaren Handhabe ausgestattet werden.

Im Folgenden wird die Erfindung anhand von lediglich einen Ausführungsweg darstellende Zeichnungen näher erläutert. Hierbei gehen aus den Zeichnungen und ihrer Beschreibung weitere Merkmale und Vorteile der Erfindung hervor.

Es zeigen:
- Figur 1:: schematisiert einen Längsschnitt durch ein Entgratwerkzeug mit einem Schneidmesser und einem daran angesetzten Messerhalter, der noch nicht abgebrochen ist
- Figur 2:: eine perspektivische Darstellung nach Figur 1
- Figur 3:: eine vergrößerte Darstellung des Schneidmessers mit daran ansetzendem Messerhalter
- Figur 4:: eine perspektivische Darstellung der Figur 3
- Figur 5:: die um 90 Grad gedrehte Ansicht der Anordnung nach Figur 4
- Figur 6:: die Stirnansicht auf die Schneidseite des Messers
- Figur 7:: schematisiert die Draufsicht auf ein Messerfenster im Werkzeugschaft nach Figur 1

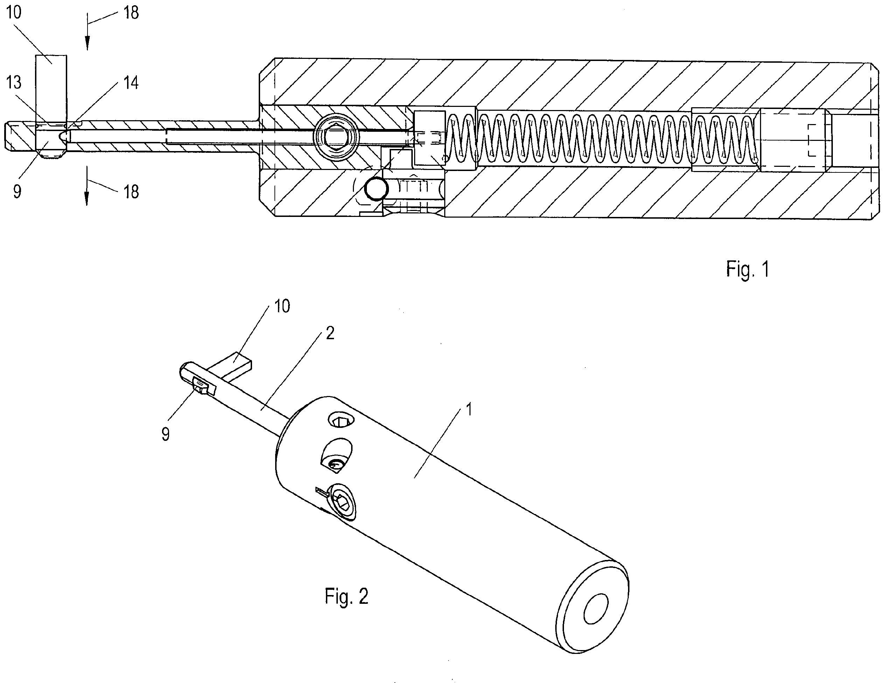

In Figur 1 wird kurz die Funktion eines Entgratmessers erläutert, obwohl dies für die vorliegende Erfindung nicht wesentlich ist. Wesentlich ist nur, dass ein relativ kleines Messer 9 in einem Messerfenster 14 eines Werkzeugschaftes 2 eines Grundkörpers 1 verschiebbar gehalten ist.

Hierbei ist das Messer 9 in dem Messerfenster 14 eingesetzt und wird von einem Stift federvorgespannt gehalten, wobei der Stift von der Druckfeder in Richtung seiner Längserstreckung vorgespannt wird. Die Feder legt sich an ihrem hinteren Ende an einen Gewindestift an, bei dessen Einstellung die Druckkraft der Druckfeder einstellbar ist.

Beim Lösen der Klemmschraube kann der gesamte Werkzeugschaft 2 aus dem Grundkörper 1 herausgezogen werden.

Es ist ferner ein Exzenter vorhanden, bei dessen Betätigung der Stift zurückgezogen werden kann, so dass dieser außer Eingriff mit der Einbuchtung 17 am Messer 9 kommt.

Auf diese Weise kann das Messer ausgewechselt werden. Wird diese Auswechslung vorgenommen, dann fällt das Messer aus dem Messerfenster 14 in Pfeilrichtung 18 heraus und muss durch ein neues Messer ersetzt werden. Der Ersatzvorgang mithilfe eines neuen Messers und dem erfindungsgemäß daran angesetzten Messerhalter 10 wird nun anhand der Figur 1 und den folgenden Figuren erläutert.

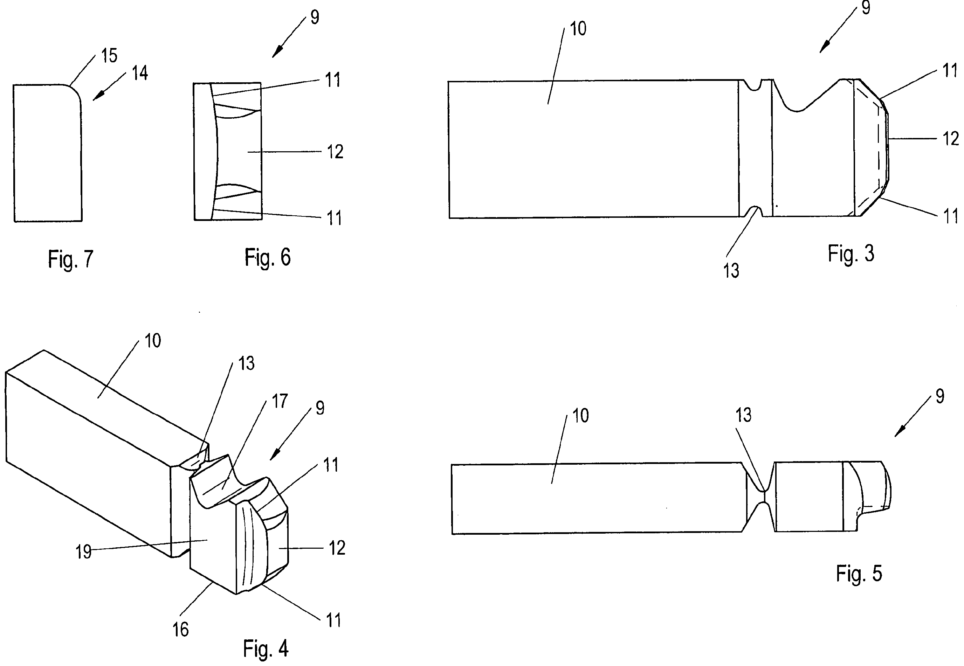

Um nun ein neues Messer in das Messerfenster 14 einsetzen zu können, ist es vorgesehen, dass gemäß Figur 4 bis 6 am hinteren Teil des Messers 9 der Messerhalter 10 ansetzt, wobei die Verbindung durch eine Sollbruchstelle 13 getrennt ist.

Es wird nunmehr das Messer 9 mit dem hinten ansetzenden Messerhalter 10 gemäß Figur 1 von oben in Pfeilrichtung 18 auf das Messerfenster 14 gepresst, und das Messer wird nun in das Messerfenster 14 hineingeschoben. Der Stift ist immer noch zurückgezogen. Es kann jedoch auch vorgesehen sein, dass der Stift bereits schon unter der Vorspannung der Druckfeder in das Messerfenster 14 hineinragt. In dieser Stellung wird nun das Messer von der oben bezeichneten Pfeilrichtung 18 nach unten in das Messerfenster 14 hineingedrückt, und zwar solange, bis die Spitze des Stiftes in die Einbuchtung 17 am Messer 9 eingreift. Das Messer befindet sich nun in seiner lagenrichtigen Position. Wird nun der Messerhalter 10 senkrecht zur Papierebene der Figur 1 mit einem kurzen Ruck gebogen, bricht er im Bereich der Sollbruchstelle 13 ab und lässt das Messer lagenrichtig montiert im Werkzeugschaft 2 zurück.

Wichtig hierbei ist, dass die Lage der Sollbruchstelle so gewählt ist, dass der Rest der Sollbruchstelle 13, die am im Werkzeugschaft 2 eingesetzten Messer 9 verbleibt, nicht störend aus dem Außenumfang des Werkzeugschaftes 2 herausragt.

Bei der Figur 1 ist noch dargestellt, dass das Messer nicht nur in Pfeilrichtung 18 von oben nach unten montiert werden kann, sondern auch entgegengesetzt der eingezeichneten Pfeilrichtung 18. Es kann also von der Unterseite her in Gegenrichtung zur Pfeilrichtung 18 in das Messerfenster eingeschoben werden.

Es wird noch darauf hingewiesen, dass hier nur die Auswechslung eines einzigen Messers gezeigt ist, wobei es selbstverständlich Werkzeuge gibt, bei denen eine Vielzahl unterschiedlicher Messer ausgewechselt werden müssen, was mit dem selben Verfahren geht. Das Verfahren besteht im Wesentlichen darin, dass mit Hilfe des Messerhalters als Handhabungshilfe das Schneidmesser in seine lagenrichtige Position im Werkzeug gebracht wird, um dann den Messerhalter 10 abzubrechen.

Die Figur 4 zeigt, dass der Messerhalter 10 an der den Schneidkanten 11 und dem Gleitradius 12 des Messers 9 gegenüberliegende Seiten über die Sollbruchstelle 13 angesetzt ist.

Ebenso kann es in einer anderen Ausführungsform vorgesehen sein, dass der Messerhalter 10 im Bereich des Gleitradius 12 mit einer Sollbruchstelle 13 mit dem Messer 9 verbunden ist oder in einer weiteren Ausführungsform, dass der Messerhalter 10 über eine Sollbruchstelle mit dem Boden 16 des Messers 9 verbunden ist.

Ebenso kann es entsprechend der Anwendungssituation, natürlich auch vorgesehen sein, dass der Messerhalter 10 über eine Sollbruchstelle mit einer seitlichen Stirnfläche 19 mit dem Messer 9 verbunden ist.

Die Figuren 3 und 5 zeigen, dass die Sollbruchstelle 13 durch eine materialschwächende Einschnürung im Metallmaterial des Schneidmessers erreicht wird. Es wird bevorzugt, wenn der Messerhalter 10 und das Schneidmesser aus dem gleichen Material bestehen. Jedoch kann es vorgesehen sein, dass das Messer 9 gehärtet ist und beispielsweise der Messerhalter 10 nicht, weil er aus dem Härtungsvorgang herausgenommen wurde, um Kosten zu sparen.

In einer anderen Ausgestaltung der vorliegenden Erfindung wird angegeben, dass die Sollbruchstelle 13 nicht durch eine Einschnürung gemäß Figur 5 und 4 gemacht wird, sondern durch eine andere materialschwächende Durchdringung im Bereich der Sollbruchstelle. Eine solche Durchdringung kann eine materialschwächende Bohrung sein, die z. B. zentrisch oder azentrisch die Verbindungsstelle zwischen dem Messerhalter 10 und dem Messer 9 durchsetzt, um ebenfalls einen materialgeschwächten Querschnitt an dieser Stelle zu erzeugen, der dann die spätere Sollbruchstelle 13 ausbildet.

Die Figur 7 zeigt noch, dass das Messerfenster 14 bevorzugt eine Schlüsselfläche 15 aufweist, um zu gewährleisten, dass das Messer 9 nur in einer bestimmten Lage, und zwar lagenrichtig, in das Messerfenster 14 eingeschoben werden kann und andere Lagen damit unmöglich sind. Damit wird auch bei sehr kleinen Messern, die nur etwa 2 mm groß sind, dafür gesorgt, dass das Messer auch ohne optische Kontrolle lagenrichtig in das Messerfenster 14 eingeschoben werden kann, wonach dann gemäß Figur 1 der Messerhalter 10 abgebrochen wird und das Messer 9 dann lagenrichtig im Werkzeugschaft 2 gehalten und arbeitsfertig vorbereitet ist.

Alle vorher genannten Befestigungsmöglichkeiten (Schneidkopf, Rückseite, Planseite seitlich - links und/oder rechts) des Messerhalters mit dem Körper des Schneidmessers werden in Alleinstellung je für sich, jedoch auch in Kombination untereinander als erfindungswesentlich beansprucht.

### Zeichnungslegende

- 1: Grundkörper
- 2: Werkzeugschaft
- 3: -
- 4: -
- 5: -
- 6: -
- 7: -
- 8: -
- 9: Messer
- 10: Messerhalter
- 11: Schneidkante
- 12: Gleitradius
- 13: Sollbruchstelle
- 14: Messerfenster
- 15: Schlüsselfläche
- 16: Boden
- 17: Einbuchtung
- 18: Pfeilrichtung
- 19: Stirnfläche

## Patentansprüche

1. Schneidwerkzeug mit mindestens einem spanabhebenden, schwierig von Hand zu manipulierende Schneidmesser (9), welches in einem Messerfenster (14) eines drehend angetriebenen Werkzeugschaftes (2) eines Grundkörpers (1) des Schneidwerkzeuges auswechselbar gehalten ist, **dadurch gekennzeichnet, dass** am Schneidmesser (9) mindestens ein über eine Sollbruchstelle (13) mit dem Schneidmesser (9) verbundener, der Handhabung dienender Messerhalter (10) befestigt ist.

2. Schneidwerkzeug nach Anspruch 1, **dadurch gekennzeichnet, dass** das Schneidwerkzeug aus einem in axialer Richtung drehend angetriebenen Werkzeugschaft (2) besteht, der mindestens ein in radialer Richtung weisendes Messerfenster (14) trägt, in welches das mindestens eine Schneidmesser (9) auswechselbar eingesetzt ist.

3. Schneidwerkzeug nach Anspruch 1, **dadurch gekennzeichnet, dass** das Schneidwerkzeug aus einem in axialer Richtung drehend angetriebenen Werkzeugschaft besteht, der mindestens ein in axialer Richtung weisendes Messerfenster trägt, in das das mindestens eine Schneidmesser (9) auswechselbar eingesetzt ist.

4. Schneidwerkzeugnach einem der Ansprüche 1 bis 3, **dadurch gekennzeichnet, dass,** das Schneidmesser (9) eine Einbuchtung (17) aufweist, in welche ein vertikal verschiebbarer Stift (3) des Schneidwerkzeuges (1) eingreift.

5. Schneidwerkzeug nach einem der Ansprüche 1 bis 4, **dadurch gekennzeichnet, dass** das Schneidmesser (9) und der Messerhalter (10) eine nahezu reckeckförmige Außenkontur aufweisen.

6. Schneidwerkzeug nach einem der Ansprüche 1 bis 4, **dadurch gekennzeichnet, dass** der Messerhalter (10) im Bereich des Gleitradius (12) mit einer Sollbruchstelle (13) mit dem Schneidmesser (9) verbunden ist.

7. Schneidwerkzeug nach einem der Ansprüche 1 bis 4, **dadurch gekennzeichnet, dass** der Messerhalter (10) über eine Sollbruchstelle mit dem Boden (16) des Schneidmessers (9) verbunden ist.

8. Schneidwerkzeug nach einem der Ansprüche 1 bis 7, **dadurch gekennzeichnet, dass** die Sollbruchstelle (13) durch eine materialschwächende Einschnürung im Metallmaterial des Schneidmessers gebildet ist.

9. Schneidwerkzeug nach einem der Ansprüche 1 bis 7, **dadurch gekennzeichnet, dass** die Sollbruchstelle (13) durch eine materialschwächende Bohrung in der Verbindungsstelle zwischen dem Messerhalter (10) und dem Messer (9) gebildet ist.

10. Schneidwerkzeug nach einem der Ansprüche 1 bis 8, **dadurch gekennzeichnet, dass** am Messer (9) zwei Messerhalter (10) befestigt sind.

11. Schneidwerkzeug nach Anspruch 10, **dadurch gekennzeichnet, dass** die beiden Messerhalter (10, 10) fluchtend zueinander in gleicher Ebene angeordnet sind und der eine Messerhalter (10) in Einführrichtung dem Schneidmesser (9) voraus und der andere Messerhalter (10) dem Schneidmesser (9) nachläuft.

12. Verfahren zur Befestigung eines Schneidmessers in einem spanabhebenden Schneidwerkzeug, insbesondere einem Entgratmesser, bei dem ein relativ kleines Schneidmesser (9) in einem Messerfenster (14) eines drehend angetriebenen Werkzeugschaftes (2) eines Grundkörpers (1) des Schneidwerkzeuges auswechselbar gehalten ist, **dadurch gekennzeichnet, dass** das Schneidmesser (9) mit mindestens einem noch über eine Sollbruchstelle befestigten Messerhalter (10) in das Messerfenster (14) des Schneidwerkzeuges eingeführt wird und dort lagenrichtig verankert wird, und dass nach der lagenrichtigen Verankerung des Schneidmessers (9) durch einen kurzen Druck auf den oder die Messerhalter, der als Handhabungshilfe dient, die Sollbruchstelle durch Biegung beansprucht wird, solange bis sie bricht und der Messerhalter als Abfall entfernt wird.

## Claims

1. Cutting tool having at least one maschining cutting knife (9) which is difficult to manipulate by hand and which is interchangeably retained in a knife window (14) of a rotary-driven tool shaft (2) of a base body (1) of the cutting tool, **characterised in that** at least one knife holder (10) serving for handling and connected to the cutting knife (9) via a predetermined breaking point (13) is attached to the cutting knife (9).

2. Cutting tool according to claim 1, **characterised in that** the cutting tool consists of a tool shaft (2) rotary-driven in axial direction and which carries at least one knife window (14) pointing in radial direction and into which the at least one cutting knife (9) is inserted to be interchangeable.

3. Cutting tool according to claim 1, **characterised in that** the cutting tool consists of a tool shaft rotary-driven in axial direction and which carries at least one knife window pointing in axial direction and into which the at least one cutting knife (9) is inserted to be interchangeable.

4. Cutting tool according to one of claims 1 to 3, **characterised in that** the cutting knife (9) has a recess (17) into which a vertically displaceable pin (3) of the cutting tool (1) engages.

5. Cutting tool according to one of claims 1 to 4, **characterised in that** the cutting knife (9) and the knife holder (10) have an almost rectangular outer contour.

6. Cutting tool according to one of claims 1 to 4, **characterised in that** the knife holder (10) in the region of the floating radius (12) is connected to the cutting knife (9) by a predetermined breaking point (13).

7. Cutting tool according to one of claims 1 to 4, **characterised in that** the knife holder (10) is connected to the base (16) of the cutting knife (9) via a predetermined breaking point.

8. Cutting tool according to one of claims 1 to 7, **characterised in that** the predetermined breaking point (13) is formed by a material-weakening constriction in the metal material of the cutting knife.

9. Cutting tool according to one of claims 1 to 7, **characterised in that** the predetermined breaking point (13) is formed by a material-weakening drilled hole in the connecting point between the knife holder (10) and the knife (9).

10. Cutting tool according to one of claims 1 to 8, **characterised in that** two knife holders (10) are attached to the knife (9).

11. Cutting tool according to claim 10, **characterised in that** the two knife holders (10, 10) are arranged to be aligned with one another in the same plane and the one knife holder (10) runs in front of the cutting knife (9) in the introduction direction and the other knife holder (10) goes behind the cutting knife (9).

12. Method for attaching a cutting knife in a maschining cutting tool, in particular a deburring knife, in which a relatively small cutting knife (9) is interchangeably retained in a knife window (14) of a rotary-driven tool shaft (2) of a base body (1) of the cutting tool, **characterised in that** the cutting knife (9) having at least one knife holder (10) still attached via a predetermined breaking point is introduced into the knife window (14) of the cutting tool and is anchored there in correct position, and **in that** after correct position anchoring of the cutting knife (9) by brief pressure on the knife holder or holders, which serves as a handling aid, the predetermined breaking point is stressed by bending until it breaks and the knife holder is removed as waste.

## Revendications

1. Outil de coupe avec au moins une lame de coupe par enlèvement (9), difficile à manipuler à la main, qui est retenue, en étant apte à être changée, dans une ouverture pour lame (14) d'une queue d'outil (2) entraînée en rotation d'un corps de base (1) de l'outil de coupe, **caractérisé en ce qu'**au moins un porte-lame (10) qui sert à la manipulation et qui est relié par un point de rupture (13) à la lame de coupe (9) est fixé à la lame de coupe (9) .

2. Outil de coupe selon la revendication 1, **caractérisé en ce que** l'outil de coupe se compose d'une queue d'outil (2) qui est entraînée en rotation dans le sens axial et qui porte au moins une ouverture pour lame (14) qui est dirigée dans le sens radial et dans laquelle la ou les lames de coupe (9) sont placées de manière à pouvoir être changées.

3. Outil de coupe selon la revendication 1, **caractérisé en ce que** l'outil de coupe se compose d'une queue d'outil qui est entraînée en rotation dans le sens axial et qui porte au moins une ouverture pour lame qui est dirigée dans le sens axial et dans laquelle la ou les lames de coupe (9) sont placées de manière à pouvoir être changées.

4. Outil de coupe selon l'une des revendications 1 à 3, **caractérisé en ce que** la lame de coupe (9) présente un creux (17) dans lequel pénètre une tige (3), apte à coulisser verticalement, de l'outil de coupe (1).

5. Outil de coupe selon l'une des revendications 1 à 4, **caractérisé en ce que** la lame de coupe (9) et le porte-lame (10) présentent un contour extérieur à peu près rectangulaire.

6. Outil de coupe selon l'une des revendications 1 à 4, **caractérisé en ce que** dans la zone du rayon de glissement (12), le porte-lame (10) est relié à la lame de coupe (9) par un point de rupture (13).

7. Outil dé coupe selon l'une des revendications 1 à 4, **caractérisé en ce que** le porte-lame (10) est relié par l'intermédiaire d'un point de rupture à la partie inférieure (16) de la lame de coupe (9).

8. Outil de coupe selon l'une des revendications 1 à 7, **caractérisé en ce que** le point de rupture (13) est formé par un rétrécissement d'affaiblissement de matière prévu dans la matière métallique de la lame de coupe.

9. Outil de coupe selon l'une des revendications 1 à 7, **caractérisé en ce que** le point de rupture (13) est formé par un perçage d'affaiblissement de matière prévu dans le point de liaison entre le porte-lame (10) et la lame (9).

10. Outil de coupe selon l'une des revendications 1 à 8, **caractérisé en ce que** deux porte-lame (10) sont fixés à la lame (9).

11. Outil de coupe selon la revendication 10, **caractérisé en ce que** les deux porte-lame (10, 10) sont disposés dans l'alignement, dans le même plan, et l'un d'eux se trouve en avant de la lame de coupe (9), dans le sens d'introduction, tandis que l'autre se trouve en arrière de la lame de coupe (9).

12. Procédé pour fixer une lame de coupe dans un outil de coupe par enlèvement, en particulier dans une lame d'ébavurage, selon lequel une lame de coupe (9) relativement petite est retenue, en étant apte à être changée, dans une ouverture pour lame (14) d'une queue d'outil (2) entraînée en rotation d'un corps de base (1) de l'outil de coupe, **caractérisé en ce que** la lame de coupe (9) est introduite dans ladite ouverture pour lame (14) de l'outil de coupe avec au moins un porte-lame (10) encore fixé par l'intermédiaire d'un point de rupture, et est ancrée à cet endroit dans la bonne position, et **en ce qu'**après l'ancrage de la lame de coupe (9) dans la bonne position, le point de rupture est contraint par flexion grâce à une brève pression sur le ou les porte-lame qui servent d'accessoire de manipulation, jusqu'à ce qu'il se casse et que le porte-lame soit enlevé comme rebut.
